(19) Europäisches Patentamt
European Patent Office
Office européen des brevets

(11) Veröffentlichungsnummer: **0 189 130 B1**

# (12) EUROPÄISCHE PATENTSCHRIFT

(45) Veröffentlichungstag der Patentschrift: **22.07.92**

(51) Int. Cl.5: **C08L 75/04**, C08K 3/00, C08K 5/00

(21) Anmeldenummer: **86100542.9**

(22) Anmeldetag: **17.01.86**

## (54) Flammwidrige, thermoplastische Polyurethan-Elastomere, Verfahren zu deren Herstellung und deren Verwendung.

(30) Priorität: **21.01.85 DE 3501762**

(43) Veröffentlichungstag der Anmeldung:
**30.07.86 Patentblatt 86/31**

(45) Bekanntmachung des Hinweises auf die Patenterteilung:
**22.07.92 Patentblatt 92/30**

(84) Benannte Vertragsstaaten:
**AT BE CH DE FR GB IT LI NL SE**

(56) Entgegenhaltungen:
**EP-A- 0 038 899**
**CA-A- 980 936**
**DE-A- 2 712 319**
**FR-A- 2 273 848**

(73) Patentinhaber: **Elastogran GmbH**
**Postfach 1140**
**W-2844 Lemförde(DE)**

(72) Erfinder: **Hackl, Christa**
**An der Buddemuehle 8**
**W-4515 Bad Essen 1(DE)**
Erfinder: **Wagner, Dietrich, Dr.**
**Felix-Nussbaum-Strasse 19**
**W-4500 Osnabrueck(DE)**
Erfinder: **Rombrecht, Hans Malte, Dr.**
**Schaeferskamp 93**
**W-2844 Ouernheim(DE)**

(74) Vertreter: **Mutzbauer, Helmut, Dr. et al**
**BASF Aktiengesellschaft Patentabteilung**
**ZSP-C 6 Carl-Bosch-Strasse 38**
**W-6700 Ludwigshafen(DE)**

EP 0 189 130 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Thermoplastische Polyurethan-Elastomere, im folgenden abgekürzt TPU genannt, sind seit langem bekannt. Ihre technische Bedeutung beruht auf der Kombination hochwertiger mechanischer Eigenschaften mit den Vorteilen der kostengünstigen Thermoplastverarbeitung. Durch die Verwendung unterschiedlicher chemischer Aufbaukomponenten läßt sich eine große Variationsbreite mechanischer Eigenschaften erzielen. Eine Übersicht über TPU, ihre Eigenschaften und Anwendungen wird z.B. in Kunststoffe 68 (1978), Seiten 819 bis 825 oder Kautschuk, Gummi, Kunststoffe 35 (1982), Seiten 568 bis 584, gegeben.

TPU können kontinuierlich oder diskontinuierlich nach verschiedenen Verfahren hergestellt werden. Als die bekanntesten werden das sogenannte Bandverfahren und das Extruderverfahren auch technisch genutzt.

Nach der GB-PS 1 057 018 wird aus einer im wesentlichen linearen Polyhydroxylverbindung und überschüssigem organischen Diisocyanat ein Prepolymeres hergestellt, das über eine Dosierpumpe einem Mischkopf zugeführt und dort mit einer bestimmten Menge eines niedermolekularen Diols gemischt wird. Das erhaltene Reaktionsgemisch wird auf ein Förderband gebracht und durch einen auf 70 bis 130 °C erhitzten Ofen geführt, bis es erstarrt. Das Reaktionsprodukt wird danach zerkleinert, bei Temperaturen bis 120 °C 6 bis 40 Stunden getempert und kann so z.B. mit Spritzgußmaschinen zu Formkörpern verarbeitet werden.

Beim Extruderverfahren, das z.B. in der DE-OS 20 59 570 (US 3 642 964) beschrieben wird, werden die Aufbaukomponenten direkt in den Extruder eingebracht und die Reaktion im Extruder unter bestimmten Verfahrensbedingungen durchgeführt. Das gebildete Polyurethan-Elastomere wird in den thermoplastischen Zustand übergeführt, als Strang extrudiert, in einer Inertgasatmosphäre bis zum Erstarren abgekühlt und zerkleinert. Nachteilig an diesem Verfahren ist, daß die erhaltenen TPU nicht für die Herstellung von Folien oder von feinen Profilen und Schläuchen geeignet sind. TPU gleicher Zusammensetzung sind nach dem Extruderverfahren transparent, während sie nach dem Bandverfahren ein opakes Aussehen aufweisen. Opake TPU können zu Folien verarbeitet werden, die kein Blocken zeigen, während transparente TPU hierfür ungeeignet sind.

Zur Verbesserung der Flammschutzwirkung können in TPU halogenhaltige organische Verbindungen incorporiert werden. Zur Verstärkung der Flammschutzwirkung kann man außerdem eine Reihe von Metalloxiden zusetzen, wie z.B. ZnO, $B_2O_3$, $Fe_2O_3$, CaO und $Sb_2O_3$. Diese Verbindungen zeigen selbst keinen Flammschutzeffekt, sie sind aber zusammen mit dem organisch gebundenen Halogen synergistisch wirksam. Als wirksamstes System hat sich dabei Antimon-(III)-oxid/organische Halogenverbindungen erwiesen (s. W.C. Kuryla und A.J. Lapa, Flame Retardancy of Polymeric Materials, Bd. 3 (Verlag Marcel Dekker, New York, 1975).

Die FR-A-2 273 848 (DE-A- 25 24 817 bzw. US-A-3 970 716)beschreibt nicht entflammbare Formmassen aus einem Polyurethan-Elastomeren und einem chlorierten Polyethylen in Gewichtsverhältnis 95 : 5 bis 50 : 50, die als Flammschutzmittel chlorierte Cyclopentadien-Addukte und gegebenenfalls Antimontrioxid in einem bestimmten Mengenverhältnis enthalten. Nicht erwähnt wird der Zusatz von Bromverbindungen als Flammschutzmittel. Die DE-OS 29 01 774 beschreibt als TPU-Additiv ein Konzentrat aus Antimontrioxid und bromierten Diphenylethern oder bromiertem Polystyrol. Beispiele für die Flammschutzwirkung werden nicht offenbart.

Die US-PS 4 395 511 betrifft TPU, die als Flammschutzmittel eine Mischung aus Decabromdiphenyloxid und Antimontrioxid, gegebenenfalls in Kombination mit Ammoniumpolyphosphat enthalten. Halogenarme TPU enthalten nach Angaben der EP-OS 62 210 (US 4 397 974) eine spezielle 4-Stoff-Additiv-Mischung aus Antimontrioxid, chlorierten und/oder bromierten aromatischen Verbindungen, Aluminiumhydroxid und Phosphorsäuretriester sowie gegebenenfalls quartäre Tetraalkylammoniumsalze.

Die EP-OS 4175 beschreibt zur Verminderung der Rauchgasdichte im Brandfalle eine Mischung aus Polyvinylchlorid, chloriertem Polyethylen oder chlorierten Paraffinen und Zinkoxid sowie gegebenenfalls Antimontrioxid.

Die beschriebenen Produkte weisen alle den Nachteil auf, daß durch den Zusatz der Mehrstoff-Additive die Abriebbeständigkeit und andere mechanische Eigenschaften des TPU beeinträchtigt werden. Besonders nachteilig ist außerdem, daß einige zur Flammfestausrüstung verwendete niedermolekulare Substanzen, wie beispielsweise die in der DE-PS 2 524 817 genannten chlorierten Cyclopentadien-Addukte und hochbromierte aromatische Produkte, wie z.B. Deca- und Dodecabromdiphenylether aus den Folien, Formkörpern, Schläuchen und Kabelummantelungen mit der Zeit ausblühen und auf der Oberfläche einen bei vielen Anwendungen störenden Belag bilden.

Die Aufgabe der vorliegenden Erfindung bestand darin, die obengenannten Nachteile ganz oder zumindest teilweise zu verbessern. Durch den flammhemmenden Zusatz sollten insbesondere die mechanischen Eigenschaften des TPU nicht beeinträchtigt werden. Ferner sollten die Flammschutzmittel bei

Lagerung der Halbzeuge und Fertigartikel nicht ausblühen.

Diese Aufgabe konnte überraschenderweise gelöst werden mit Hilfe einer speziellen Kombination an sich bekannter Flammschutzmittel.

Gegenstand der Erfindung sind somit flammwidrige, thermoplastische Polyurethan-Elastomere, die als flammhemmenden Zusatz eine Kombination enthalten, die besteht aus

a) Antimontrioxid oder Zinkborat oder Mischungen aus Antimontrioxid und Zinkborat,

b) chloriertem Polyethylen und

c) mindestens einer bromierten aromatischen Verbindung aus der Gruppe Poly(tetrabrombisphenol-A-glycidylether) und Poly(tetrabrombisphenol-A-carbonat).

Gegenstand der Erfindung ist ferner ein Verfahren zur Herstellung der erfindungsgemäßen flammwidrigen TPU nach Anspruch 6 und deren Verwendung zur Herstellung von Formkörpern, Folien und Kabelummantelungen nach Anspruch 8.

Die erfindungsgemäßen flammwidrigen TPU weisen den Vorteil auf, daß die Flammschutzmittel nur unerheblich oder gar nicht ausblühen und die mechanischen Eigenschaften des TPU durch den Zusatz der Flammschutzmittel-Kombination nur unwesentlich gemindert werden.

Geeigente TPU, die durch den Zusatz der erfindungsgemäßen Flammschutzmittel-Kombination flammwidrig werden, unterscheiden sich selbst sehr stark untereinander in der chemischen Zusammensetzung. Die weichen TPU, beispielsweise mit einer Härte von 80 Shore A, enthalten einen niedrige Konzentration an Hartphase, d.h. niedrige Gewichtsteile an Diisocyanat und difunktionellen niedermolekularen Kettenverlängerern und einen hohen Anteil an Weichphase, d.h. einen hohen Gewichtsteil an höhermolekularen Polyhydroxylverbindungen. Die harten TPU mit beispielsweise einer Shore-A-Härte von 98 enthalten eine hohe Konzentration an Hartphase und einen niedrigen Anteil an Weichphase. Die zur Erzielung einer sehr guten Flammwidrigkeit erforderlichen Gewichtsteile der Flammschutzmittelkombination entsprechend dieser Erfindung ist umso niedriger, je härter der TPU ist. Außerdem lassen sich Polyester-TPU erfahrungsgemäß mit relativ niedrigeren Konzentrationen der erfindungsgemäßen Flammschutzmittel flammwidrig ausrüsten. Polyether-TPU gleicher Shore-Härte benötigen demgegenüber vergleichsweise höhere Konzentrationen der erfindungsgemäßen Flammschutzmittelkombination, um flammfest zu werden. Im Hinblick auf diese experimentellen Befunde schwanken die erforderlichen Konzentrationen an Flammschutzmittel innerhalb weiter Grenzen, abhängig vom TPU-Typ und von der Härte des TPU.

Zur Erzielung einer sehr guten Flammwidrigkeit werden pro 100 Gew.-Teilen TPU zweckmäßigerweise

a) 2 bis 10 Gew.-Teile, vorzugsweise 3 bis 8 Gew.-Teile Antimontrioxid und/oder Zinkborat,

b) 1 bis 14 Gew.-Teile, vorzugsweise 1 bis 13,5 Gew.-Teile und insbesondere 2 bis 13 Gew.-Teile chloriertes Polyethylen und

c) 2 bis 15 Gew.-Teile, vorzugsweise 3,5 bis 14 Gew.-Teile mindestens einer bromierten aromatischen Verbindung verwendet.

Das Antimontrioxid (a) wird zweckmäßigerweise in feingemahlener Form eingesetzt. Produkte mit einer durchschnittlichen Teilchengröße von ungefähr 1,0 bis 5,0 μm, vorzugsweise 1,2 bis 1,6 μm haben sich besonders bewährt.

Als Zinkborat wird vorzugsweise ein solches verwendet, das rein rechnerisch 37,5 Gew.-%, Zinkoxid, 48,0 Gew.-% Dibortrioxid und 14,5 Gew.-% Wasser enthält. Das Hydratwasser dieses Zinkborats wird auch bei Temperaturen von 260 ° C nicht abgegeben. Die Teilchen des Zinkborats haben eine Größe von unter 50 μm, vorzugsweise 1 bis 10 μm. Anstelle von Antimontrioxid oder Zinkborat kommen auch Mischungen aus den genannten Verbindungen in Betracht, wobei die Mengenverhältnisse in breiten Bereichen variiert werden können.

Als chloriertes Polyethylen (b) werden zweckmäßigerweise Polymere mit einem Chlorgehalt von 25 bis 45 Gew.-%, vorzugsweise von 20 bis 40 Gew.-% und einem melt Flowindex (190 ° C / 21,6 Kp / 10 min) von 1 bis 40, vorzugsweise 2 bis 10 verwendet. Insbesondere geeignet ist chloriertes, gegen thermischen Abbau stabilisiertes Polyethylen. Hierbei werden die chlorierten Polyethylene in Anlehnung an DIN 53 735 durch an sich bekannte Zusätze so stabilisiert, daß bei den Verarbeitungstemperaturen des TPU, d.h. die Temperaturen bis ungefähr 260 ° C, kein merklicher Abbau eintritt.

Geeignete bromierte aromatische Verbindungen (c) besitzen einen Bromgehalt von 40 bis 85 Gew.-%, vorzugsweise von 45 bis 81 Gew.-%. Besonders bewährt haben sich und daher vorzugsweise verwendet werden Verbindungen aus der Gruppe Poly(tetrabrombisphenol-A-carbonat) und insbesondere Poly-(tetrabrombisphenol-A-glycidylether). Unter Polytetrabrombisphenol-A-glycidylether sind im Sinne der Erfindung Produkte zu verstehen, wie sie z.B. durch Umsetzung von Tetrabrombisphenol-A- mit Epoxiden (Oxiranen) oder Dichloralkanen gebildet werden. Derartige Produkte besitzen folgende chemische Konstitution:

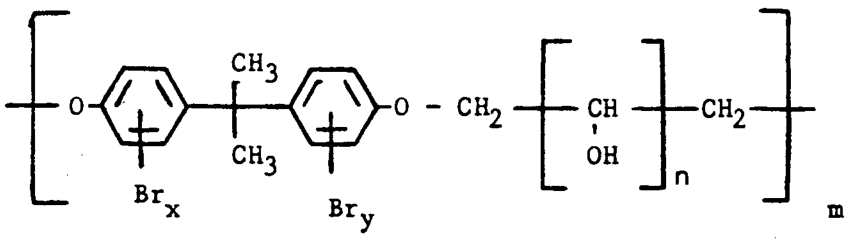

in der X, Y = 2, n = 0 bis 2 und m = 3 bis 100 bedeuten.

Aufgrund ihrer Herstellung können die Produkte endständige Oxirangruppen enthalten, die mit mono- und polyfunktionellen chemischen Verbindungen mit reaktiven Wasserstoffatomen, wie z.B. aliphatischen und/oder aromatischen Mono- oder Polyaminen, oder tertiäre Aminogruppen enthaltenden Verbindungen zur Umsetzung gebracht werden können. Die aromatischen bromierten Verbindungen können einzeln oder in Form von Mischungen oder Konzentraten eingesetzt werden.

Zur Herstellung der flammwidrigen TPU können die Bestandteile (a) bis (c) der Kombination einzeln oder in Form einer Mischung aus mindestens zwei Bestandteilen einem oder mehreren Ausgangsstoffen zur Herstellung der TPU vor, der Reaktionsmischung während des Polyurethan bildenden Umsetzung oder dem fertigen TPU einverleibt werden. Die Bestandteile (a) bis (c) können gleichzeitig oder nacheinander in einer geeigneten Reihenfolge eingebracht werden. Nach einer bevorzugten Ausführungsform wird aus einem oder mehreren der Bestandteile ein Konzentrat (Batch) hergestellt und dieses in das TPU eingearbeitet.

Beispielhaft genannt seien folgende Verfahrensvarianten zum Einbringen der Kombinationsbestandteile (a) bis (c). Es wird ein Konzentrat der Bestandteile (a) bis (c) in TPU hergestellt und dieses Konzentrat zusammen mit unbehandeltem TPU zu dem erfindungsgemäßen flammwidrigen TPU weiterverarbeitet. Die bromierte aromatische Verbindung und das Antimontrioxid und/oder Zinkborat werden in einem thermoplastischen chlorierten, vorzugsweise gegen thermischen Abbau stabilisierten Polyethylen als Matrix zu einem Konzentrat dispergiert, das in unbehandeltes TPU eingearbeitet wird. Ein Konzentrat aus ungefähr 90 bis 95 Gew.-% Antimontrioxid und/oder Zinkborat in Polyethylen wird gemeinsam mit einem Konzentrat auf der bromierten aromatischen Verbindung in chloriertem Polyethylen in das unbehandelte TPU eingebracht. Von jedem einzelnen Bestandteil (a) bis (c) der Kombination wird ein Konzentrat in TPU hergestellt und diese Konzentrate werden gemeinsam oder nacheinander in unbehandeltes TPU eingearbeitet. Aus Antimontrioxid und/oder Zinkborat und einer polymeren bromierten aromatischen Verbindung wird ein Konzentrat hergestellt und dieses zusammen mit chloriertem, vorzugsweise gegen thermischen Abbau stabilsiertem Polyethylen und unbehandeltem TPU weitverarbeitet. Die Bestandteile (a) bis (c) werden zusammen oder nacheinander mit einem oder mehreren Ausgangsstoffen zur Herstellung des TPU und/oder der Reaktionsmischung gemischt und zu dem erfindungsgemäßen TPU umgesetzt. TPU wird mit den Bestandteilen (a) bis (c) gleichzeitig oder nacheinander behandelt. Ein Teil der Bestandteile (a) bis (c) der Kombination wird den Ausgangsstoffen zur Herstellung des TPU oder der Reaktionsmischung einverleibt und der oder die noch fehlenden Anteile oder/und Bestandteile als Konzentrat in das erhaltene TPU eingearbeitet.

Die Herstellung der Konzentrate kann in an sich bekannter Weise, beispielsweise entsprechend den Ausführungen der DE-OS 29 01 774, durchgeführt werden.

Üblicherweise werden die Konzentrate in an sich bekannter Weise auf beheizbaren Knetern durch Mischen von beispielsweise Antimontrioxid und/oder Zinkborat mit gegen thermischen Abbau stabilisiertem chloriertem Polyethylen, der bromierten aromatischen Verbindung und TPU hergestellt und anschließend granuliert. Wie durch Versuche festgestellt wurde, sind auf Knetern hergestellte Konzentrate aus beispielsweise Antimontrioxid und/oder Zinkborat in gegen thermischen Abbau stabilisiertem chloriertem Polyethylen und/oder TPU in Mischung mit in gleicher Weise hergestellten Konzentraten aus bromierten aromatischen Verbindungen in TPU ebenso flammschützend wirksam, wenn sie dem zu stabilisierenden TPU in den Mengen zugesetzt werden, wie es dieser Erfindung entspricht. Selbstverständlich können nach dem Kneterverfahren auch Konzentrate der einzelnen Substanzen (a) bis (c) hergestellt werden, beispielsweise von Antimontrioxid und/oder Zinkborat in TPU oder von Antimontrioxid und/oder Zinkborat in Polyethylen oder in gegen thermischen Abbau stabilisiertem chloriertem Polyethylen, von bromierten aromatischen Verbindungen in TPU oder chloriertem Polyethylen, von gegen thermischen Abbau stabilisiertem chloriertem Polyethylen in TPU. Auch mit Mischungen dieser Einzelkonzentrate wird TPU flammfest, wenn die erfindungsgemäßen Mengen der Zusatzstoffe im TPU vorliegen.

Die Bestandteile (a) bis (c) der Kombination werden den Ausgangsstoffen zur TPU-Herstellung bei Temperaturen von 20 bis 150 °C einverleibt. Die Einarbeitung der Bestandteile (a) bis (c) oder der

Konzentrate in die Reaktionsmischung oder das fertige, unbehandelte TPU erfolgt bei Temperaturen von 50 bis 260 ° C, vorzugsweise von 50 bis 240 ° C im beispielsweise fließfähigen, erweichten oder geschmolzenen Zustand des TPU z.B. durch Rühren, Walzen, Kneten oder Extrudieren, beispielsweise unter Verwendung eines Doppelschnecken- oder Preßspritzmischextruders oder eines Kneters.

Die erfindungsgemäßen flammwidrigen thermoplastischen Polyurethan-Elastomere besitzen als Basiskunststoff nach dem Extruder - oder vorzugsweise dem Bandverfahren hergestellte TPU. Diese können beispielsweise durch Umsetzung von

(d) organischen Diisocyanaten,

(e) Polyhydroxylverbindungen mit Molekulargewichten von 500 bis 8000 und

(f) Kettenverlängerungsmitteln mit Molekulargewichten von 60 bis 400 gegebenenfalls in Gegenwart von

(g) Katalysatoren,

(h) Hilfsmitteln und/oder Zusatzstoffen

hergestellt werden. Zu den hierfür geeigneten Ausgangsstoffen (d) bis (h) möchten wir folgendes ausführen:

d) Als organische Diisocyante (d) kommen beispielsweise aliphatische, cycloaliphatische und vorzugsweise aromatische Diisocyanate in Betracht. Im einzelnen seien beispielhaft genannt: aliphatische Diisocyanate, wie Hexamethylen-diisocyanat, cycloaliphatische Diisocyanate, wie Isophoron-diisocyanat, 1,4-Cyclohexan-diisocyanat, 1-Methyl-2,4- und - 2,6-cyclohexan-diisocyanat sowie die entsprechenden Isomerengemische, 4,4'-, 2,4'- und 2,2'-Dicyclohexylmethan-diisocyanat sowie die entsprechenden Isomerengemische und vorzugsweise aromatische Diisocyanate, wie 2,4-Toluylen-diisocyanat, Gemische aus 2,4- und 2,6-Toluylen-diisocyanat, 4,4'-, 2,4'- und 2,2'-Diphenylmethan-diisocyanat,Gemische aus 2,4'- und 4,4'-Diphenylmethan-diisocyanat, urethanmodifizierte flüssige 4,4'- und/oder 2,4'-Diphenylmethan-diisocyanate, 4,4'-Diisocyanato-diphenylethan-(1,2) und 1,5-Naphthylen-diisocyanat. Vorzugsweise verwendet werden Hexamethylen-diisocyanat, Isophoron-diisocyanat, 1,5-Naphthylen-diisocyanat, Diphenylmethan-diisocyanat-Isomerengemische mit einem 4,4'-Diphenylmethan-diisocyanatgehalt von größer als 96 Gew.-% und insbesondere 4,4'-Diphenylmethan-diisocyanat.

e) Als höhermolekulare Polyhydroxylverbindungen (e) mit Molekulargewichten von 500 bis 8000 eignen sich vorzugsweise Polyetherole und Polyesterole. In Betracht kommen jedoch auch hydroxylgruppenhaltige Polymere, beispielsweise Polyacetale, wie Polyoxymethylene und vor allem wasserunlösliche Formale, z.B. Polybutandiolformal und Polyhexandiolformal, und Polycarbonate, insbesondere solche aus Diphenylcarbonat und Hexandiol-1,6, hergestellt durch Umesterung, mit den obengenannten Molekulargewichten. Die Polyhydroxylverbindungen müssen zumindest überwiegend linear, d.h. im Sinne der Isocyanatreaktion difunktionell aufgebaut sein. Die genannten Polyhydroxylverbindungen können als Einzelkomponenten oder in Form von Mischungen zur Anwendung kommen.

Geeignete Polyetherole können dadurch hergestellt werden, daß man ein oder mehrere Alkylenoxide mit 2 bis 4 Kohlenstoffatomen im Alkylenrest mit einem Startermolekül, das zwei aktive Wasserstoffatome gebunden enthält, umsetzt. Als Alkylenoxide seine z.B. genannt: Ethylenoxid, 1,2-Propylenoxid, Epichlorhydrin und 1,2- und 2,3-Butylenoxid. Vorzugsweise Anwendung finden Ethylenoxid und Mischungen aus Propylenoxid-1,2 und Ethylenoxid. Die Alkylenoxide können einzeln, alternierend nacheinander oder als Mischung verwendet werden. Als Startermolekül kommen beispielsweise in Betracht: Wasser, Aminoalkohole, wie N-Alkyl-diethanolamine, beispielsweise N-Methyl-diethanolamin und Diole, wie Ethylenglykol, 1,3-Propylenglykol, Butandiol-1,4 und Hexandiol-1,6. Gegebenenfalls können auch Mischungen von Startermolekülen eingesetzt werden. Geeignete Polyetherole sind ferner die hydroxylgruppenhaltigen Polymerisationsprodukte des Tetrahydrofurans (Polyoxytetramethylen-glykole).

Vorzugsweise verwendet werden Polyetherole aus Propylenoxid-1,2 und Ethylenoxid, in denen mehr als 50 %, vorzugsweise 60 bis 80 % der OH-Gruppen primäre Hydroxylgruppen sind und bei denen zumindest ein Teil des Ethylenoxids als endständiger Block angeordnet ist und insbesondere Polyoxytetramethylen-glykole.

Solche Polyetherole können erhalten werden, indem man z.B. an das Startermolekül zunächst das Propylenoxid-1,2 und daran anschließend das Ethylenoxid polymerisiert oder zunächst das gesamte Propylenoxid-1,2 im Gemisch mit einem Teil des Ethylenoxids copolymerisiert und den Rest des Ethylenoxids anschließend anpolymerisiert oder schrittweise zunächst einen Teil des Ethylenoxids, dann das gesamte Propylenoxid-1,2 und dann den Rest des Ethylenoxids an das Startermolekül anpolymerisiert.

Die im wesentlichen linearen Polyetherole besitzen Molekulargewichte von 500 bis 8 000, vorzugsweise 600 bis 6 000 und insbesondere 800 bis 3 500. Sie können sowohl einzeln als auch in Form von Mischungen untereinander zur Anwendung kommen.

Geeignete Polyesterole können beispielsweise aus Dicarbonsäuren mit 2 bis 12 Kohlenstoffatomen, vorzugsweise 4 bis 6 Kohlenstoffatomen, und mehrwertigen Alkoholen hergestellt werden. Als Dicarbonsäuren kommen beispielsweise in Betracht: aliphatische Dicarbonsäuren, wie Bernsteinsäure, Glutarsäure, Adipinsäure, Korksäure, Azelainsäure und Sebacinsäure und aromatische Dicarbonsäuren, wie Phthalsäure, Isophthalsäure und Terephthalsäure. Die Dicarbonsäuren können einzeln oder als Gemische, z.B. in Form einer Bernstein-, Glutar- und Adipinsäuremischung, verwendet werden. Desgleichen sind Mischungen aus aromatischen und aliphatischen Dicarbonsäuren einsetzbar. Zur Herstellung der Polyesterole kann es gegebenenfalls vorteilhaft sein, anstelle der Dicarbonsäuren die entsprechenden Dicarbonsäurederivate, wie Dicarbonsäureester mit 1 bis 4 Kohlenstoffatomen im Alkoholrest, Dicarbonsäureanhydride oder Dicarbonsäurechloride zu verwenden. Beispiele für mehrwertige Alkohole sind Glykole mit 2 bis 10, vorzugsweise 2 bis 6 Kohlenstoffatomen, wie Ethylenglykol, Diethylenglykol, Butandiol-1,4, Pentandiol-1,5, Hexandiol-1,6, Decandiol-1,10, 2,2-Dimethylpropandiol-1,3, Propandiol-1,3 und Dipropylenglykol. Je nach den gewünschten Eigenschaften können die mehrwertigen Alkohole allein oder gegebenenfalls in Mischungen untereinander verwendet werden.

Geeignet sind ferner Ester der Kohlensäure mit den genannten Diolen, insbesondere solchen mit 4 bis 6 Kohlenstoffatomen, wie Butandiol-1,4 und/oder Hexandiol-1,6, Kondensationsprodukte von ω-Hydroxycarbonsäuren, beispielsweise ω-Hydroxycapronsäure und vorzugsweise Polymerisationsprodukte von Lactonen, beispielsweise gegebenenfalls substituierten ω-Caprolactonen.

Als Polyesterole vorzugsweise verwendet werden Ethandiol-polyadipate, 1,4-Butandiol-polyadipate, Ethandiol-butandiol-1,4-polyadipate, 1,6-Hexandiol-neopentylglykol-polyadipate, Polycaprolactone und insbesondere 1,6-Hexandiol-1,4-butandiol-polyadipate.

Die Polyesterole besitzen Molekulargewichte von 500 bis 6 000, vorzugsweise von 800 bis 3 500.

(f) Als Kettenverlängerungsmittel (f) mit Molekulargewichten von 60 bis 400, vorzugsweise 60 bis 300, kommen vorzugsweise aliphatische Diole mit 2 bis 12 Kohlenstoffatomen, vorzugsweise mit 2, 4 oder 6 Kohlenstoffatomen, wie z.B. Ethandiol, Hexandiol-1,6, Diethylenglykol, Dipropylenglykol und insbesondere Butandiol-1,4 in Betracht. Geeignet sind jedoch auch Diester der Terephthalsäure mit Glykolen mit 2 bis 4 Kohlenstoffatomen, wie z.B. Terephthalsäure-bis-ethylenglykol oder -butandiol-1,4, Hydroxyalkylenether des Hydrochinons, wie z.B. 1,4-Di-(β-hydroxyethyl)-hydrochinon, (cyclo)aliphatische Diamine, wie z.B. 4,4'-Diamino-dicyclohexylmethan, 3,3'-Dimethyl-4,4'-diamino-dicyclohexylmethan, Isophoron-diamin, Ethylendiamin, 1,2-, 1,3-Propylen-diamin, N-Methyl-propylendiamin-1,3, N,N'-Dimethyl-ethylendiamin und aromatische Diamine, wie z.B. 2,4- und 2,6-Toluylen-diamin, 3,5-Diethyl-2,4- und -2,6-toluylen-diamin und primäre ortho-di, tri- und/oder tetraalkylsubstituierte 4,4'-Diamino-diphenylmethane.

Zur Einstellung von Härte und Schmelzpunkt der TPU können die Aufbaukomponenten (e) und (f) in relativ breiten molaren Verhältnissen variiert werden. Bewährt haben sich molare Verhältnisse von Polyhydroxylverbindungen (e) zu Kettenverlängerungsmitteln (f) von 1 : 1 bis 1 : 12, insbesondere von 1 : 1,8 bis 1 : 6,4, wobei die Härte und der Schmelzpunkt der TPU mit zunehmendem Gehalt an Diolen ansteigt.

Zur Herstellung der TPU werden die Aufbaukomponente (d), (e) und (f) in Gegenwart von gegebenenfalls Katalysatoren (g), Hilfsmitteln und/oder Zusatzstoffen (h) in solchen Mengen zur Reaktion gebracht, daß das Äquivalenzverhältnis von NCO-Gruppen der Diisocyanate zur Summe der Hydroxylgruppen oder Hydroxyl- und Aminogruppen der Komponenten (b) und (c) 1 : 0,85 bis 1,20, vorzugsweise 1 : 0,95 bis 1 : 1,05 und insbesondere 1 : 0,98 bis 1,02 beträgt.

(g) Geeignete Katalysatoren, welche insbesondere die Reaktion zwischen den NCO-Gruppen der Diisocyanate (d) und den Hydroxylgruppen der Aufbaukomponenten (e) und (f) beschleunigen, sind die nach dem Stand der Technik bekannten und üblichen tertiären Amine, wie z.B. Triethylamin, Dimethylcyclohexylamin, N-Methylmorpholin, N,N'-Dimethyl-piperazin, 2-(Dimethylaminoethoxy)-ethanol, Diazabicyclo-(2,2,2)-octan und ähnliche sowie insbesondere organische Metallverbindungen wie Titansäureester, Eisenverbindungen wie z.B. Eisen-(III)-acetylacetonat, Zinnverbindungen, z.B. Zinndiacetat, Zinndioctoat, Zinndilaurat oder die Zinndialkylsalze aliphatischer Carbonsäuren wie Dibutylzinndiacetat, Dibutylzinndilaurat oder ähnliche. Die Katalysatoren werden üblicherweise in Mengen von 0,001 bis 0,1 Teilen pro 100 Teile Polyhydroxylverbindung eingesetzt.

Neben Katalysatoren können den Aufbaukomponenten auch Hilfsmittel und/oder Zusatzstoffe (h) einverleibt werden. Genannt seien beispielsweise Gleitmittel, Inhibitoren, Stabilisatoren gegen Hydrolyse, Licht, Hitze oder Verfärbung, Farbstoffe, Pigmente, anorganische und/oder organische Füllstoffe, Verstärkungsmittel und Weichmacher.

Nähere Angaben über die obengenannten Hilfsmittel- und Zusatzstoffe sind der Fachliteratur, beispielsweise der Monographie von J.H. Saunders und K.C. Frisch "High Polymers", Band XVI, Polyurethane, Teil 1 und 2, Verlag Interscience Publishers 1962 bzw. 1964 oder der DE-OS 29 01 774 zu entnehmen.

Wie bereits dargelegt wurde, wird das TPU nach dem Extruderverfahren oder vorzugsweise nach

dem Bandverfahren hergestellt. Im einzelnen wird beim Bandverfahren auf folgende Weise verfahren:

Die Aufbaukomponenten (d) bis (f) und gegebenenfalls (g) und/oder (h) werden bei Temperaturen oberhalb des Schmelzpunktes der Aufbaukomponenten (d) bis (f) mit Hilfe eines Mischkopfes kontinuierlich gemischt. Die Reaktionsmischung wird auf einen Träger, vorzugsweise ein Förderband, aufgebracht und durch eine temperierte Zone geführt. Die Reaktionstemperatur in der temperierten Zone beträgt 60 bis 200 °C, vorzugsweise 100 bis 180 °C und die Verweilzeit 0,05 bis 0,5 Stunden, vorzugsweise 0,1 bis 0,3 Stunden.

Nach beendeter Reaktion wird das TPU, das eine Härte von Shore A 60 bis Shore D 74, vorzugsweise Shore A 60 bis Shore A 98 besitzt, abkühlen gelassen, zerkleinert oder granuliert und zwischengelagert oder direkt mit dem flammhemmenden Zusatz versetzt, sofern dieser nicht bereits während der Herstellung den Ausgangsstoffen (d) bis (f) oder der Reaktionsmischung hinzugefügt wurde.

Beim Extruderverfahren werden die Aufbaukomponenten (d) bis (f) und gegebenenfalls die Bestandteile (a) bis (c) der flemmhemmenden Kombination einzeln oder als Gemisch in den Extruder eingeführt und zur Reaktion gebracht. Das extrudierte TPU kann jedoch auch nachträglich mit den flammhemmenden Zusatzstoffen (a) bis (c) der Kombination versehen werden.

Die erfindungsgemäß flammwidrigen thermoplastischen Polyurethan-Elastomeren eignen sich zur Herstellung von Rohren, Schläuchen, Kabeln oder beschichteten Geweben, beispielsweise solchen aus Glas-, Kohlenstoff-, Kunststoff- oder Textilfasern, wie sie z.B. in der Kraftfahrzeug-, Schienenfahrzeug- oder Flugzeugindustrie verwendet werden. Vorzugsweise verwendet werden sie jedoch zur Herstellung von Formkörpern, Folien und Kabelummantelungen.

Die in den Beispielen genannten Teile sind Gewichtsteile.

Beispiel 1 bis 7 und Vergleichsbeispiele I und II

Ein TPU, hergestellt nach dem Reaktionsextruder- oder dem Bandverfahren bei einer Temperatur von 50 bis 200 °C aus einem Polyoxytetramethylen-glykol (abgekürzt PTHF genannt) mit einem Molekulargewicht von 1000 und/oder einem 1,4-Butandiol-1,6-hexandiol-polyadipat (abgekürzt Bu-He-polyadipat genannt) mit einem Molekulargewicht von 2000, 4,4'-Diphenylmethan-diisocyanat (abgekürzt 4,4'-MDI genannt) und Butandiol-1,4 (abgekürzt 1,4-BuOH genannt), mit einer Härte von Shore A 80 bis 98, eins Hauptschmelzpunkt nach DSC von 150 bis 210 °C und einer Schmelzviskosität, einem MFI (melt flow index) entsprechend bei 190 °C und einem Auflagegewicht von 21,6 kp von 1 bis 80 bzw. bei 200 °C / 21,6 kp von 1 bis 10 und der flammhemmende Zusatz wurden in einem Doppelschneckenextruder der Firma Werner und Pfleiderer bei einer Temperatur von 160 bis 210 °C aufgeschmolzen, gemischt und durch eine Lochdüse zu Strängen gepreßt, die nach dem Abkühlen in üblicher Weise zu Granulat zerkleinert wurden.

Das flammwidrige TPU-Granulat wurde bei 160 bis 210 °C zu Prüfplatten verpreßt.

Die eingesetzten Ausgangsstoffe und deren Mengen sowie die an den Prüfplatten gemessenen mechanischen Eigenschaften sind in der folgenden Tabelle 1 zusammengefaßt.

Tabelle 1

| Beispiele / Vergleichsbeispiele | 1 | 2 | 3 | 4 | 5 | 6 | 7 | I | II |
|---|---|---|---|---|---|---|---|---|---|
| PTHF [Teile] | 1.000 | 1.000 | - | - | 500 | 1.000 | 1.000 | 1.000 | 1.000 |
| Bu-He-polyadipat [Teile] | - | - | 1.000 | 1.000 | 500 | - | - | - | - |
| 4,4'-MDI [Teile] | 400 | 1.200 | 350 | 1.600 | 400 | 400 | 400 | 425 | 460 |
| 1,4-BuOH [Teile] | 80 | 340 | 86 | 530 | 80 | 80 | 80 | 106 | 118 |
| Antimontrioxid [Teile] | 100 | 160 | 90 | 190 | 95 | 50 | - | 100 | 100 |
| Zinkborat [Teile] | - | - | - | - | - | 50 | 100 | - | - |
| chloriertes Polyethylen [Teile] | 145 | 245 | 135 | 100 | 140 | 145 | 140 | 145 | - |
| Poly(tetrabrombisphenol-A-glycidylether [Teile] | 145 | 245 | 135 | 100 | 140 | 145 | 150 | - | 150 |
| mechanische Eigenschaften: | | | | | | | | | |
| Shore-A-Härte (DIN 53 505) | 85 | 98 | 82 | 98 | 84 | 85 | 85 | 86 | 87 |
| Zerreißfestigkeit (DIN 53 504)[$N/mm^2$] | 51 | 47 | 49 | 54 | 56 | 48 | 52 | 51 | 53 |
| Bruchdehnung (DIN 53 504) [%] | 690 | 370 | 650 | 450 | 590 | 540 | 610 | 550 | 520 |
| Abrieb (DIN 53 516) [$mm^3$] | 35 | 46 | 42 | 49 | 41 | 38 | 43 | 38 | 47 |
| spez. Gewicht (DIN 53 550) [$g/cm^3$] | 1.21 | 1.26 | 1.21 | 1.27 | 1.23 | 1.21 | 1.21 | 1.21 | 1.21 |
| Flammbeständigkeit nach VDE 0472 § 804 neu | | | | | | | | | |
| Probe verlischt nach Sek: | 30 | 5 | 10 | 5 | 15 | 15 | 20 | brennt | brennt |

## Beispiele 8 bis 15 und Vergleichsbeispiele III und IV

Ein TPU, hergestellt aus einem Polyoxytetramethylenglykol (abgekürzt PTHF genannt) mit einem Molekulargewicht von 1.000 und/oder einem 1,2-Ethandiol-1,4-butandiol-polyadipat (abgekürzt Ed-Bu-polyadipat genannt) mit einem Molekulargewicht von 1.000, 4,4'-Diphenylmethandiisocyanat (abgekürzt 4,4'-MDI genannt) und Butandiol-1.4 (abgekürzt 1,4-BuOH genannt) mit einer Härte von Shore A 80 bis 98 mit einem Hauptschmelzpunkt nach DSC von 140 bis 200 ° C und einer Suhmelzviskosität, einem MFI (melt flow index) entsprechend einem Auflagegewicht von 21,6 kp von 1 bis 80 bzw. bei 200 ° C / 21,6 kp von 1 bis 10 und Batche der Flammschutzmittel wurden einerseits in einem (R)Banbury-Kneter mit nachgeschaltetem (R)Farell-extruder andererseits auf einem Einwellenextruder der Firma Henschel-Rheinstahl aufgeschmolzen, gemischt und durch eine Lochdüse zu Strängen gepreßt, die nach dem Abkühlen in üblicher Weise zu Granulat zerkleinert wurden. Das flammwidrige TPU-Granulat wurde bei 160 bis 210 ° C zu Prüfplatten verpreßt. Die eingesetzten Ausgangsstoffe und deren Mengen sowie die an den Prüfplatten gemessenen mechanischen Eigenschaften sind in Tabelle 2 zusammengefaßt.

In Beispiel 8 wurde dem TPU vor der Konfektionierung ein grannlatförmiger Batch aus 50 Teilen Antimontrioxid und 72,5 Teilen Poly(tetrabrombisphenol-A-glycidylether) sowie das chlorierte gegen thermischen Abbau stabilisierte Polyethylen in Granulatform zugegeben.

In Beispiel 9 wurde dem TPU vor der Konfektionierung ein granulatförmiger Batch aus 50 Teilen Antimontrioxid und 72,5 Teilen eines 2,4,6-Tribromphenyl-terminierten Poly(tetrabrombisphenol-A-carbonat) sowie das chlorierte gegen thermischen Abbau stabilisierte Polyethylen in Granulatform zugegeben.

In Beispiel 10 wurde dem TPU ein grannlatförmiger Batch aus 25 Teilen Antimontrioxid, 25 Teilen Zinkborat und 72,5 Teilen Poly(tetrabrombisphenol-A-glycidylether) sowie das chlorierte gegen thermischen Abbau stabilisierte Polyethylen in Granulatform zugegeben.

In Beispiel 11 wurde dem TPU ein Batch aus 25 Teilen TPU, 28 Teilen Poly(tetrabrombisphenol-A-glycidylether), 28 Teilen chloriertem gegen thermischen Abbau stabilisiertem Polyethylen und 19 Teilen Antimontrioxid zugegeben.

In Beispiel 12 wurde dem TPU ein Batch aus 25 Teilen TPU, 28 Teilen Poly(tetrabrombisphenol-A-glycidylether), 28 Teilen chloriertem gegen thermischen Abbau stabilisiertem Polyethylen, 9,5 Teilen Zinkborat und 9,5 Teilen Antimontrioxid zugegeben.

In Beispiel 13 wurde dem TPU ein Batch aus 25 Teilen TPU, 28 Teilen Poly(tetrabrombisphenol-A-glycidylether), 28 Teilen chloriertem gegen thermischen Abbau stabilisiertem Polyethylen und 19 Teilen Zinkborat zugegeben.

In Beispiel 14 wurde dem TPU ein Batch aus 25 Teilen TPU, 28 Teilen Poly(tetrabrombisphenol-A-glycidylether), 28 Teilen chloriertem gegen thermischen Abbau stabilisiertem Polyethylen und 19 Teilen Zinkborat zugegeben.

In Beispiel 15 wurde dem TPU ein Batch aus 25 Teilen TPU, 28 Teilen Poly(tetrabrombisphenol-A-glycidylether), 28 Teilen chloriertem gegen thermischen Abbau stabilisierten Polyethylen und 19 Teilen Zinkborat zugegeben.

In Vergleichsbeispiel III wurde die Menge an chloriertem Polyethylen soweit erhöht, damit ausreichender Brandschutz gewährleistet war. Die Zerreißfestigkeit dieses flammgeschützten TPU ist erheblich niedriger, der Abrieb untolerierbar hoch im Vergleich zu den flammgeschützten TPU's entsprechend dieser Erfindung.

In Vergleichsbeispiel IV wurde die Menge an Poly(tetrabrombisphenol-A-glycidylether) durch 1,2,3,4,7,8,9,10,13,13,14,14-Dodecachloro-1,4,4a,5,6,6a,7,10,10a,11,12,12a-dodecahydro-1,4:7,10-dimethanodibenzo(a,e)cycloocten (abgekürzt Cycloocten genannt) ersetzt. Der Flammschutz ist gut. Jedoch ist der Abrieb dieses flammgeschützten TPU untolerierbar hoch. Außerdem blüht das Flammschutzmittel aus.

Tabelle 2

| Beispiele Vergleichsbeispiele | 8 | 9 | 10 | 11 | 12 | 13 | 14 | 15 | III | IV |
|---|---|---|---|---|---|---|---|---|---|---|
| PTHF [Teile] | 1000 | 1000 | 1000 | 1000 | 1000 | 1000 | - | - | 1000 | 1000 |
| Ed-Bu-polyadipat [Teile] | - | - | - | - | - | - | 1000 | 1000 | - | - |
| 4,4'-MDI [Teile] | 400 | 400 | 400 | 400 | 400 | 400 | 400 | 400 | 400 | 400 |
| 1,4-BuOH [Teile] | 80 | 80 | 80 | 80 | 80 | 80 | 80 | 80 | 80 | 80 |
| Antimontrioxid [Teile] | 100 | 100 | 50 | 100 | 50 | - | 66 | - | 100 | 90 |
| Zinkborat [Teile] | - | - | 50 | - | 50 | 100 | - | 66 | - | - |
| chloriertes Polyethylen [Teile] | 145 | 145 | 145 | 147 | 147 | 147 | 98 | 98 | 290 | 136 |
| Cycloocten [Teile] | - | - | - | - | - | - | - | - | - | 136 |
| Poly(tetrabrombisphenol--A-glycidylether [Teile] | 145 | - | 145 | 147 | 147 | 147 | 98 | 98 | - | - |
| 2,4,6-Tribromphenylterminertes Poly-tetrabrombisphenol-A-carbonat [Teile] | - | 145 | - | - | - | - | - | - | - | - |
| mechanische Eigenschaften: | | | | | | | | | | |
| Shore-A-Härte (DIN 53505) | 87 | 88 | 86 | 87 | 85 | 86 | 87 | 88 | 88 | 87 |
| Zerreißfestigkeit (DIN 53504) [$N/mm^2$] | 49 | 51 | 50 | 48 | 51 | 52 | 56 | 50 | 22 | 38 |
| Bruchdehnung (DIN 53504) [%] | 530 | 605 | 580 | 520 | 610 | 530 | 590 | 580 | 610 | 515 |
| Abrieb (DIN 53516) [$mm^3$] | 41 | 36 | 43 | 42 | 37 | 40 | 38 | 43 | 168 | 143 |
| Spez. Gewicht (DIN 53550) [$g/cm^3$] | 1.21 | 1.21 | 1.21 | 1.21 | 1.21 | 1.21 | 1.26 | 1.21 | 1.21 | 1.205 |
| Flammbeständigkeit nach VDE 0472 § 804 neu | | | | | | | | | | |
| Probe verlischt nach Sek.: | 30 | 25 | 40 | 15 | 15 | 35 | 20 | 25 | 35 | 25 |

## Patentansprüche

1. Flammwidrige, thermoplastische Polyurethan-Elastomere, enthaltend als flammhemmenden Zusatz eine Kombination, bestehend aus
   a) Antimontrioxid und/oder Zinkborat,

b) chloriertem Polyethylen und
c) mindestens einer bromierten aromatischen Verbindung aus der Gruppe Poly(tetrabrombisphenol-A-glycidylether) und Poly(tetrabrombisphenol-A-carbonat).

**2.** Flammwidrige, thermoplastische Polyurethan-Elastomere nach Anspruch 1, enthaltend pro 100 Gew.-Teile thermoplastisches Polyurethan-Elastomer
a) 2 bis 10 Gew.-Teile Antimontrioxid und/oder Zinkborat,
b) 1 bis 14 Gew.-Teile chloriertes Polyethylen und
c) 2 bis 15 Gew.-Teile mindestens einer bromierten aromatischen Verbindung aus der Gruppe Poly-(tetrabrombisphenol-A-glycidylether) und Poly(tetrabrombisphenol-A-carbonat).

**3.** Flammwidrige, thermoplastische Polyurethan-Elastomere nach Anspruch 1 oder 2, enthaltend als Komponente (c) Poly(tetrabrombisphenol-A-glycidylether).

**4.** Flammwidrige, thermoplastische Polyurethan-Elastomere nach Anspruch 1, enthaltend pro 100 Gew.-Teile thermoplastisches Polyurethan-Elastomer
a) 3 bis 8 Gew.-Teile Antimontrioxid und/oder Zinkborat,
b) 1 bis 13,5 Gew.-Teile chloriertes Polyethylen und
c) 2 bis 15 Gew.-Teile Poly(tetrabrombisphenol-A-glycidylether).

**5.** Flammwidrige, thermoplastische Polyurethan-Elastomere nach Anspruch 1, dadurch gekennzeichnet, daß das thermoplastische Polyurethan-Elastomere hergestellt wurde durch Umsetzung von 4,4'-Diphenylmethan-diisocyanat, Polyoxytetramethylen-glykol und/oder 1,4-Butandiol-1,6-Hexandiol-polyadipatund 1,4-Butandiol.

**6.** Verfahren zur Herstellung von flammwidrigen, thermoplastischen Polyurethan-Elastomeren, dadurch gekennzeichnet, daß man den Ausgangsstoffen zur Herstellung der thermoplastischen Polyurethan-Elastomeren vor, der Reaktionsmischung während der Polyurethan bildenden Umsetzung oder dem fertigen thermoplastischen Polyurethan-Elastomeren als flammhemmenden Zusatz eine Kombination, bestehend aus
a) Antimontrioxid und/oder Zinkborat,
b) chloriertem Polyethylen und
c) mindestens einer bromierten aromatischen Verbindung aus der Gruppe Poly(tetrabrombisphenol-A-glycidylether) und Poly(tetrabrombisphenol-A-carbonat) einverleibt.

**7.** Verfahren nach Anspruch 6, dadurch gekennzeichnet, daß man als flammhemmenden Zusatz eine Kombination, bestehend aus
a) 2 bis 10 Gew.-Teilen Antimontrioxid und/oder Zinkborat,
b) 1 bis 14 Gew.-Teilen chloriertem Polyethylen und
c) 2 bis 15 Gew.-Teilen mindestens einer bromierten aromatischen Verbindung aus der Gruppe Poly(tetrabrombisphenol-A-glycidylether) und Poly(tetrabrombisphenol-A-carbonat)
pro 100 Gew.-Teilen thermoplastisches Polyurethan-Elastomer einverleibt.

**8.** Verwendung von flammwidrigen, thermoplastischen Polyurethan-Elastomeren nach Anspruch 1 zur Herstellung von Formkörpern, Folien und Kabelummantelungen.

## Claims

**1.** A flame-resistant, thermoplastic polyurethane elastomer, containing, as flame-inhibiting additive, a combination comprising
a) antimony trioxide and/or zinc borate,
b) chlorinated polyethylene and
c) at least one brominated aromatic compound from the group comprising poly(tetrabromobisphenol A glycidyl ether) and poly(tetrabromobisphenol A carbonate).

**2.** A flame-resistant, thermoplastic polyurethane elastomer as claimed in claim 1, containing, per 100 parts by weight of the thermoplastic polyurethane elastomer,
a) from 2 to 10 parts by weight of antimony trioxide and/or zinc borate,

b) from 1 to 14 parts by weight of chlorinated polyethylene and

c) from 2 to 15 parts by weight of at least one brominated aromatic compound from the group comprising poly(tetrabromobisphenol A glycidyl ether) and poly(tetrabromobisphenol A carbonate).

**3.** A flame-resistant, thermoplastic polyurethane elastomer as claimed in claim 1 or 2, wherein component (c) is poly(tetrabromobisphenol A glycidyl ether).

**4.** A flame-resistant, thermoplastic polyurethane elastomer as claimed in claim 1, containing, per 100 parts by weight of the thermoplastic polyurethane elastomer,

a) from 3 to 8 parts by weight of antimony trioxide and/or zinc borate,

b) from 1 to 13.5 parts by weight of chlorinated polyethylene and

c) from 2 to 15 parts by weight of poly(tetrabromobisphenol A glycidyl ether).

**5.** A flame-resistant, thermoplastic polyurethane elastomer as claimed in claim 1, which has been prepared by reacting 4,4'-diphenylmethane diisocyanate, polyoxytetramethylene glycol and/or 1,4-butanediol 1,6-hexanediol polyadipate and 1,4-butanediol.

**6.** A process for the preparation of a flame-resistant, thermoplastic polyurethane elastomer, which comprises incorporating, as flame-inhibiting additive, a combination comprising

a) antimony trioxide and/or zinc borate,

b) chlorinated polyethylene and

c) at least one brominated aromatic compound from the group comprising poly(tetrabromobisphenol A glycidyl ether) and poly(tetrabromobisphenol A carbonate).

into the starting materials for the preparation of the thermoplastic polyurethane elastomer, the reaction mixture during the polyurethane-forming reaction or the finished thermoplastic polyurethane elastomer.

**7.** A process as claimed in claim 6, wherein the flame-inhibiting additive is a combination comprising

a) from 2 to 10 parts by weight of antimony trioxide and/or zinc borate,

b) from 1 to 14 parts by weight of chlorinated polyethylene and

c) from 2 to 15 parts by weight of at least one brominated aromatic compound from the group comprising poly(tetrabromobisphenol A glycidyl ether) and poly(tetrabromobisphenol A carbonate)

per 100 parts by weight of the thermoplastic polyurethane elastomer.

**8.** The use of a flame-resistant, thermoplastic polyurethane elastomer as claimed in claim 1 for the production of moldings, films and cable cladding.

**Revendications**

**1.** Elastomères de polyuréthannes thermoplastiques ininflammables contenant, en tant qu'additif retardateur de combustion, une combinaison consistant en :

a) du trioxyde d'antimoine et/ou du borate de zinc,

b) un polyéthylène chloré, et

c) au moins un composé aromatique bromé pris dans le groupe formé par un poly-(éther glycidylique du tétrabromobisphénol-A) et un poly-(carbonate du tétrabromobisphénol-A).

**2.** Elastomères de polyuréthannes thermoplastiques ininflammables selon la revendication 1 contenant, pour 100 parties en poids de l'élastomère de polyuréthanne thermoplastique :

a) 2 à 10 parties en poids de trioxyde d'antimoine et/ou de borate de zinc,

b) 1 à 14 parties en poids d'un polyéthylène chloré, et

c) 2 à 15 parties en poids d'au moins un composé aromatique bromé pris dans le groupe formé par un poly-(éther glycidylique du tétrabromobisphénol-A) et un poly-(carbonate du tétrabromobisphénol-A).

**3.** Elastomères de polyuréthannes thermoplastiques ininflammables selon la revendication 1 ou 2 contenant, en tant que composant c) un poly-(éther glycidylique du tétrabromobisphénol-A).

**4.** Elastomères de polyuréthannes thermoplastiques ininflammables selon la revendication 1 contenant, pour 100 parties en poids de l'élastomère de polyuréthanne thermoplastique :

a) 3 à 8 parties en poids de trioxyde d'antimoine et/ou de borate de zinc,
b) 1 à 13,5 parties en poids d'un polyéthylène chloré, et
c) 2 à 15 parties en poids d'un poly-(éther glycidylique du tétrabromobisphénol-A).

**5.** Elastomères de polyuréthannes thermoplastiques ininflammables selon la revendication 1, caractérisés en ce que l'élastomère de polyuréthanne thermoplastique a été préparé par réaction du 4,4'-diphénylméthane-diisocyanate, d'un polyoxytétraméthylène-glycol et/ou d'un polyadipate du 1,4-butane-diol-1,6-hexane-diol et du 1,4-butane-diol.

**6.** Procédé de préparation d'élastomères de polyuréthannes thermoplastiques ininflammables, caractérisé en ce que l'on incorpore aux produits de départ de la préparation des élastomères de polyuréthannes thermoplastiques, avant la réaction de formation du polyuréthanne, au mélange de réaction durant la réaction de formation du polyuréthanne ou à l'élastomère de polyuréthanne thermoplastique fini, en tant qu'additif retardateur de combustion, une combinaison consistant en :
a) le trioxyde d'antimoine et/ou le borate de zinc,
b) un polyéthylène chloré, et
c) au moins un composé aromatique bromé pris dans le groupe formé par un poly-(éther glycidylique du tétrabromobisphénol-A) et un poly-(carbonate du tétrabromobisphénol-A).

**7.** Procédé selon la revendication 6, caractérisé en ce que l'on incorpore en tant qu'additif retardateur de combustion une combinaison consistant en :
a) 2 à 10 parties en poids de trioxyde d'antimoine et/ou de borate de zinc,
b) 1 à 14 parties en poids d'un polyéthylène chloré, et
c) 2 à 15 parties en poids d'au moins un composé aromatique bromé pris dans le groupe formé par un poly-(éther glycidylique du tétrabromobisphénol-A) et un poly-(carbonate du tétrabromobisphénol-A).
pour 100 parties en poids de l'élastomère de polyuréthanne thermoplastique.

**8.** Utilisation d'élastomères de polyuréthanne thermoplastiques ininflammables selon la revendication 1 pour la fabrication de corps moulés, de feuilles et de gaines de câbles.